(19) Europäisches Patentamt
European Patent Office
Office européen des brevets

(11) **EP 4 607 374 A1**

(12) **EUROPEAN PATENT APPLICATION**
published in accordance with Art. 153(4) EPC

(43) Date of publication:
**27.08.2025 Bulletin 2025/35**

(21) Application number: **22964674.0**

(22) Date of filing: **07.11.2022**

(51) International Patent Classification (IPC):
**G06F 17/00** (2019.01)

(52) Cooperative Patent Classification (CPC):
**G06F 17/00**

(86) International application number:
**PCT/CN2022/130311**

(87) International publication number:
**WO 2024/098195 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• YE, Yuhang
  Shenzhen, Guangdong 518129 (CN)
• LI, Lin
  Shenzhen, Guangdong 518129 (CN)
• YANG, Hui
  Shenzhen, Guangdong 518129 (CN)
• LI, Jizhong
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **EMBEDDING REPRESENTATION MANAGEMENT METHOD AND APPARATUS**

(57) An embedding representation management method and apparatus are provided. The method includes: loading, in response to a first version number input by a user, a first embedding representation corresponding to the first version number from a disk into a memory (S410); training the first embedding representation based on preset training data to obtain a second embedding representation (S420); determining a second version number of the second embedding representation based on the first version number and a scenario of the training data (S430); and storing the second embedding representation and the second version number on the disk (S440). Multi-version embedding representation management can be implemented, to reduce management costs of the embedding representations, and improve management efficiency.

```
┌─────────────────────────────────────────┐  ╱─ S410
│ Load, in response to a first version     │
│ number input by a user, a first          │
│ embedding representation corresponding   │
│ to the first version number from a disk  │
│ into a memory                            │
└─────────────────────────────────────────┘
              │
              ▼                              ╱─ S420
┌─────────────────────────────────────────┐
│ Train the first embedding representation │
│ based on preset training data to obtain  │
│ a second embedding representation        │
└─────────────────────────────────────────┘
              │
              ▼                              ╱─ S430
┌─────────────────────────────────────────┐
│ Determine a second version number of     │
│ the second embedding representation      │
│ based on the first version number and    │
│ a scenario of the training data          │
└─────────────────────────────────────────┘
              │
              ▼                              ╱─ S440
┌─────────────────────────────────────────┐
│ Store the second embedding representation│
│ and the second version number on the disk│
└─────────────────────────────────────────┘
```

FIG. 4

## Description

## TECHNICAL FIELD

This application relates to the field of information retrieval, and in particular, to an embedding representation management method and apparatus.

## BACKGROUND

With large-scale expansion of Internet information, embedding representations (Embedding) are widely used in the field of information retrieval. From text-based web page news to image-text commodities and short videos with richer information, each may be encoded into an embedding representation, which eventually plays an important role in a ranking or recall procedure of information retrieval. Therefore, the embedding representation is an important representation of Internet information.

In a related technology, embedding representations are usually managed in a form of file. However, with a continuous increase in pre-training manners, scenarios, and data scales, an existing embedding representation management manner has problems such as high management costs and poor management efficiency. Therefore, there is an urgent need for a new embedding representation management method.

## SUMMARY

In view of this, an embedding representation management method and apparatus are provided.

According to a first aspect, an embodiment of this application provides an embedding representation management method. The method includes: loading, in response to a first version number input by a user, a first embedding representation corresponding to the first version number from a disk into a memory; training the first embedding representation based on preset training data to obtain a second embedding representation; determining a second version number of the second embedding representation based on the first version number and a scenario of the training data; and storing the second embedding representation and the second version number on the disk.

In this embodiment of this application, the first embedding representation corresponding to the first version number is loaded from the disk into the memory in response to the first version number input by the user; then, the first embedding representation is trained based on the preset training data to obtain the second embedding representation; then, the second version number of the second embedding representation is determined based on the first version number and the scenario of the training data; and the second embedding representation and the second version number are stored on the disk. This can implement multi-version embedding representation management, reduce management costs of the embedding representations, and improve management efficiency.

According to the first aspect, in a first possible implementation of the embedding representation management method, the training the first embedding representation to obtain a second embedding representation includes: in a training process of the first embedding representation, obtaining a first intermediate version of the first embedding representation based on a preset first time interval, where the first time interval is on a daily basis; when a latest obtained first intermediate version meets a preset first evaluation condition, storing the latest obtained first intermediate version on the disk; and when a preset training end condition is met, ending training to obtain the second embedding representation.

In this embodiment, in the training process of the first embedding representation, the first intermediate version of the first embedding representation can be obtained based on the preset first time interval (on the daily basis); when the latest obtained first intermediate version meets the preset first evaluation condition, the latest obtained first intermediate version is stored on the disk; and then when the preset training end condition is met, training is ended to obtain the second embedding representation. In this manner, in the training process of the first embedding representation, a daily dump of the first intermediate version of the first embedding representation can be implemented, so that when an anomaly is detected in the training process, rollback can be performed based on the stored daily intermediate version (a full intermediate version), to reduce operation and maintenance costs of developing the embedding representation.

According to the first possible implementation of the first aspect, in a second possible implementation of the embedding representation management method, the training the first embedding representation to obtain a second embedding representation includes: in the training process of the first embedding representation, obtaining a second intermediate version of the first embedding representation based on a preset second time interval, where the second time interval is on an hourly basis or a minute basis; determining a first difference between a latest obtained second intermediate version and a previous second intermediate version; and when the first difference meets a preset second evaluation condition, backing up the latest obtained second intermediate version to the memory.

In this embodiment, in the training process of the first embedding representation, the second intermediate version of the first embedding representation can be obtained based on the preset second time interval (on the hourly basis or the minute basis); the first difference between the latest obtained second intermediate version and the previous second intermediate version is determined; and when the first difference meets the preset second evaluation condition, the latest obtained second intermediate version is backed up to the memory. **In** this manner, in the training process of the first embedding representation, the hourly/minute backup of the second intermediate version of the first embedding representation can be implemented, so that when an anomaly is detected in the training process, version rollback can be performed based on an hourly/minute backup version (an incremental intermediate version), to reduce operation and maintenance costs of developing the embedding representation.

According to the second possible implementation of the first aspect, in a third possible implementation of the embedding representation management method, the training the first embedding representation to obtain a second embedding representation includes: when the latest obtained first intermediate version does not meet the first evaluation condition, or when the first difference does not meet the second evaluation condition, selecting a rollback version from the second intermediate version in the memory or the first intermediate version on the disk according to a preset version rollback rule; and continuing training based on the rollback version.

In this embodiment, when the latest obtained first intermediate version does not meet the first evaluation condition, or when the first difference does not meet the second evaluation condition, the rollback version can be selected from the second intermediate version in the memory or the first intermediate version on the disk according to the preset version rollback rule; and training can be continued based on the rollback version. In this manner, the training process of the first embedding representation can be dynamically monitored, and when an anomaly is detected, version rollback is automatically performed, so that adjustment for the anomaly or an online disturbance can be automatically completed without manual intervention in the training process of the embedding representation. This can further significantly reduce operation and maintenance costs of developing the embedding representation.

According to the second possible implementation of the first aspect, in a fourth possible implementation of the embedding representation management method, the method further includes: loading a first nearest neighbor graph corresponding to the first embedding representation from the disk into the memory; and the training the first embedding representation to obtain a second embedding representation includes: in the training process of the first embedding representation, dynamically updating the first nearest neighbor graph based on the second time interval, to obtain a nearest neighbor graph corresponding to each second intermediate version; and after the second embedding representation is obtained, determining a second nearest neighbor graph corresponding to the second embedding representation.

In this embodiment, in the training process of the first embedding representation, the first nearest neighbor graph is dynamically updated based on the second time interval, to obtain the nearest neighbor graph corresponding to each second intermediate version; and after the second embedding representation is obtained, the second nearest neighbor graph corresponding to the second embedding representation is determined. In this way, in the training process of the first embedding representation, the first nearest neighbor graph can be dynamically updated, so that version difference comparison can be performed based on the nearest neighbor graph corresponding to the second intermediate version.

According to the fourth possible implementation of the first aspect, in a fifth possible implementation of the embedding representation management method, the determining a first difference between a latest obtained second intermediate version and a previous second intermediate version includes: obtaining a third nearest neighbor graph and a fourth nearest neighbor graph, where the third nearest neighbor graph is a nearest neighbor graph corresponding to the latest obtained second intermediate version, and the fourth nearest neighbor graph is a nearest neighbor graph corresponding to the previous second intermediate version; determining a changed node in the third nearest neighbor graph based on the fourth nearest neighbor graph; determining neighbor change information and node change information of each changed node, where the neighbor change information includes at least one of a neighbor change quantity, a neighbor change ratio, and a local neighbor similarity score, and the node change information includes at least one of a node offset direction and a node offset distance; and determining the first difference between the latest obtained second intermediate version and the previous second intermediate version based on the neighbor change information and the node change information of each changed node.

In this embodiment, when the first difference is determined, the third nearest neighbor graph and the fourth nearest neighbor graph can be first obtained; then the changed node in the third nearest neighbor graph is determined based on the fourth nearest neighbor graph; the neighbor change information and the node change information of each changed node are determined; and then the first difference between the latest obtained second intermediate version and the previous second intermediate version is determined based on the neighbor change information and the node change information of each changed node. In this way, the first difference between the latest obtained second intermediate version and the previous second intermediate version may be quickly and accurately determined, to improve processing efficiency.

According to the first aspect or any one of the first possible implementation of the first aspect to the fifth possible implementation of the first aspect, in a sixth possible implementation of the embedding representation management method, the storing the second embedding representation and the second version number on the disk includes: storing the second embedding representation on the disk in a multi-level differential storage manner.

**In** this embodiment, the second embedding representation can be stored on the disk in the multi-level differential storage manner. This can greatly save a storage resource and effectively reduce storage consumption.

According to the sixth possible implementation of the first aspect, in a seventh possible implementation of the embedding representation management method, the storing the second embedding representation on the disk in a multi-level differential storage manner includes: determining a fifth embedding representation from the second embedding representation, where the fifth embedding representation is an embedding representation that is in the second embedding representation and that is changed relative to the first embedding representation; storing the fifth embedding representation on the disk; and establishing, based on a first address and a second address, a storage mapping table corresponding to the second embedding representation, where the first address is an address, on the disk, of an embedding representation that is in the second embedding representation and that is not changed relative to the first embedding representation, and the second address is an address, on the disk, of the fifth embedding representation.

**In** this embodiment, when the second embedding representation is stored on the disk in the multi-level differential storage manner, the fifth embedding representation may be first determined from the second embedding representation, where the fifth embedding representation is the embedding representation that is in the second embedding representation and that is changed relative to the first embedding representation; then, the fifth embedding representation is stored on the disk; and then the storage mapping table corresponding to the second embedding representation can be established based on the first address and the second address, where the first address is the address, on the disk, of the embedding representation that is in the second embedding representation and that is not changed relative to the first embedding representation, and the second address is the address, on the disk, of the fifth embedding representation. This can implement multi-level differential storage of the second embedding representation, effectively saving a disk storage resource.

According to the first aspect or any one of the first possible implementation of the first aspect to the seventh possible implementation of the first aspect, in an eighth possible implementation of the embedding representation management method, the method further includes: in response to a user request for comparing a third embedding representation and a fourth embedding representation, separately performing dimensionality reduction on the third embedding representation and the fourth embedding representation, to obtain a first dimensionality reduction vector and a second dimensionality reduction vector; determining a second difference between the third embedding representation and the fourth embedding representation; and displaying the first dimensionality reduction vector, the second dimensionality reduction vector, and the second difference.

**In** this embodiment, in response to the user request for comparing the third embedding representation and the fourth embedding representation, dimensionality reduction can be separately performed on the third embedding representation and the fourth embedding representation, to obtain the first dimensionality reduction vector and the second dimensionality reduction vector; in addition, the second difference between the third embedding representation and the fourth embedding representation is determined; and then the first dimensionality reduction vector, the second dimensionality reduction vector, and the second difference are displayed. This can implement visual display of differences between embedding representations in different versions.

According to a second aspect, an embodiment of this application provides an embedding representation management apparatus. The apparatus includes: a first loading module, configured to load, in response to a first version number input by a user, a first embedding representation corresponding to the first version number from a disk into a memory; a training module, configured to train the first embedding representation based on preset training data to obtain a second embedding representation; a version number determining module, configured to determine a second version number of the second embedding representation based on the first version number and a scenario of the training data; and a storage module, configured to store the second embedding representation and the second version number on the disk.

In this embodiment of this application, the first embedding representation corresponding to the first version number is loaded from the disk into the memory in response to the first version number input by the user; then, the first embedding representation is trained based on the preset training data to obtain the second embedding representation; then, the second version number of the second embedding representation is determined based on the first version number and the scenario of the training data; and the second embedding representation and the second version number are stored on the disk. This can implement multi-version embedding representation management, reduce management costs of the embedding representations, and improve management efficiency.

According to the second aspect, in a first possible implementation of the embedding representation management apparatus, the training module includes: a first obtaining submodule, configured to: in a training process of the first embedding representation, obtain a first intermediate version of the first embedding representation based on a preset first time interval, where the first time interval is on a daily basis; a first storage submodule, configured to: when a latest obtained first intermediate version meets a preset first evaluation condition, store the latest obtained first intermediate version on the disk; and a training end submodule, configured to: when a preset training end condition is met, end training to obtain the second embedding representation.

In this embodiment, in the training process of the first embedding representation, the first intermediate version of the first embedding representation can be obtained based on the preset first time interval (on the daily basis); when the latest obtained first intermediate version meets the preset first evaluation condition, the latest obtained first intermediate version is stored on the disk; and then when the preset training end condition is met, training is ended to obtain the second embedding representation. In this manner, in the training process of the first embedding representation, a daily dump of the first intermediate version of the first embedding representation can be implemented, so that when an anomaly is detected in the training process, rollback can be performed based on the stored daily intermediate version (a full intermediate version), to reduce operation and maintenance costs of developing the embedding representation.

According to the first possible implementation of the second aspect, in a second possible implementation of the embedding representation management apparatus, the training module includes: a second obtaining submodule, configured to: in the training process of the first embedding representation, obtain a second intermediate version of the first embedding representation based on a preset second time interval, where the second time interval is on an hourly basis or a minute basis; a difference determining submodule, configured to determine a first difference between a latest obtained second intermediate version and a previous second intermediate version; and a second storage submodule, configured to: when the first difference meets a preset second evaluation condition, back up the latest obtained second intermediate version to the memory.

In this embodiment, in the training process of the first embedding representation, the second intermediate version of the first embedding representation can be obtained based on the preset second time interval (on the hourly basis or the minute basis); the first difference between the latest obtained second intermediate version and the previous second intermediate version is determined; and when the first difference meets the preset second evaluation condition, the latest obtained second intermediate version is backed up to the memory. In this manner, in the training process of the first embedding representation, the hourly/minute backup of the second intermediate version of the first embedding representation can be implemented, so that when an anomaly is detected in the training process, version rollback can be performed based on an hourly/minute backup version (an incremental intermediate version), to reduce operation and maintenance costs of developing the embedding representation.

According to the second possible implementation of the second aspect, in a third possible implementation of the embedding representation management apparatus, the training module includes: a rollback submodule, configured to: when the latest obtained first intermediate version does not meet the first evaluation condition, or when the first difference does not meet the second evaluation condition, select a rollback version from the second intermediate version in the memory or the first intermediate version on the disk according to a preset version rollback rule; and a training submodule, configured to continue training based on the rollback version.

In this embodiment, when the latest obtained first intermediate version does not meet the first evaluation condition, or when the first difference does not meet the second evaluation condition, the rollback version can be selected from the second intermediate version in the memory or the first intermediate version on the disk according to the preset version rollback rule; and training can be continued based on the rollback version. In this manner, the training process of the first embedding representation can be dynamically monitored, and when an anomaly is detected, version rollback is automatically performed, so that adjustment for the anomaly or an online disturbance can be automatically completed without manual intervention in the training process of the embedding representation. This can further significantly reduce operation and maintenance costs of developing the embedding representation.

According to the second possible implementation of the second aspect, in a fourth possible implementation of the embedding representation management apparatus, the apparatus further includes: a second loading module, configured to load a first nearest neighbor graph corresponding to the first embedding representation from the disk into the memory; and the training module includes: a dynamic update submodule, configured to: in the training process of the first embedding representation, dynamically update the first nearest neighbor graph based on the second time interval, to obtain a nearest neighbor graph corresponding to each second intermediate version; and a nearest neighbor graph determining submodule, configured to: after the second embedding representation is obtained, determine a second nearest neighbor graph corresponding to the second embedding representation.

In this embodiment, in the training process of the first embedding representation, the first nearest neighbor graph is dynamically updated based on the second time interval, to obtain the nearest neighbor graph corresponding to each second intermediate version; and after the second embedding representation is obtained, the second nearest neighbor graph corresponding to the second embedding representation is determined. In this way, in the training process of the first embedding representation, the first nearest neighbor graph can be dynamically updated, so that version difference comparison can be performed based on the nearest neighbor graph corresponding to the second intermediate version.

According to the fourth possible implementation of the second aspect, in a fifth possible implementation of the embedding representation management apparatus, the difference determining submodule is configured to: obtain a third nearest neighbor graph and a fourth nearest neighbor graph, where the third nearest neighbor graph is a nearest neighbor graph corresponding to the latest obtained second intermediate version, and the fourth nearest neighbor graph is a nearest neighbor graph corresponding to the previous second intermediate version; determine a changed node in the third nearest neighbor graph based on the fourth nearest neighbor graph; determine neighbor change information and node change information of each changed node, where the neighbor change information includes at least one of a neighbor change quantity, a neighbor change ratio, and a local neighbor similarity score, and the node change information includes at least one of a node offset direction and a node offset distance; and determine the first difference between the latest obtained second intermediate version and the previous second intermediate version based on the neighbor change information and the node change information of each changed node.

In this embodiment, when the first difference is determined, the third nearest neighbor graph and the fourth nearest neighbor graph can be first obtained; then the changed node in the third nearest neighbor graph is determined based on the fourth nearest neighbor graph; the neighbor change information and the node change information of each changed node are determined; and then the first difference between the latest obtained second intermediate version and the previous second intermediate version is determined based on the neighbor change information and the node change information of each changed node. In this way, the first difference between the latest obtained second intermediate version and the previous second intermediate version may be quickly and accurately determined, to improve processing efficiency.

According to the second aspect or any one of the first possible implementation of the second aspect to the fifth possible implementation of the second aspect, in a sixth possible implementation of the embedding representation management apparatus, the storage module includes: a differential storage submodule, configured to store the second embedding representation on the disk in a multi-level differential storage manner.

In this embodiment, the second embedding representation can be stored on the disk in the multi-level differential storage manner. This can greatly save a storage resource and effectively reduce storage consumption.

According to the sixth possible implementation of the second aspect, in a seventh possible implementation of the embedding representation management apparatus, the differential storage submodule is configured to: determine a fifth embedding representation from the second embedding representation, where the fifth embedding representation is an embedding representation that is in the second embedding representation and that is changed relative to the first embedding representation; store the fifth embedding representation on the disk; and establish, based on a first address and a second address, a storage mapping table corresponding to the second embedding representation, where the first address is an address, on the disk, of an embedding representation that is in the second embedding representation and that is not changed relative to the first embedding representation, and the second address is an address, on the disk, of the fifth embedding representation.

In this embodiment, when the second embedding representation is stored on the disk in the multi-level differential storage manner, the fifth embedding representation may be first determined from the second embedding representation, where the fifth embedding representation is the embedding representation that is in the second embedding representation and that is changed relative to the first embedding representation; then, the fifth embedding representation is stored on the disk; and then the storage mapping table corresponding to the second embedding representation can be established based on the first address and the second address, where the first address is the address, on the disk, of the embedding representation that is in the second embedding representation and that is not changed relative to the first embedding representation, and the second address is the address, on the disk, of the fifth embedding representation. This can implement multi-level differential storage of the second embedding representation, effectively saving a disk storage resource.

According to the second aspect or any one of the first possible implementation of the second aspect to the seventh possible implementation of the second aspect, in an eighth possible implementation of the embedding representation management apparatus, the apparatus further includes: a dimensionality reduction module, configured to: in response to a user request for comparing a third embedding representation and a fourth embedding representation, separately perform dimensionality reduction on the third embedding representation and the fourth embedding representation, to obtain a first dimensionality reduction vector and a second dimensionality reduction vector; a difference determining module, configured to determine a second difference between the third embedding representation and the fourth embedding representation; and a display module, configured to display the first dimensionality reduction vector, the second dimensionality reduction vector, and the second difference.

In this embodiment, in response to the user request for comparing the third embedding representation and the fourth embedding representation, dimensionality reduction can be separately performed on the third embedding representation and the fourth embedding representation, to obtain the first dimensionality reduction vector and the second dimensionality reduction vector; in addition, the second difference between the third embedding representation and the fourth embedding representation is determined; and then the first dimensionality reduction vector, the second dimensionality reduction vector, and the second difference are displayed. This can implement visual display of differences between embedding representations in different versions.

According to a third aspect, an embodiment of this application provides an embedding representation management apparatus, including a processor, and a storage configured to store instructions executable by the processor, where when executing the instructions, the processor is configured to implement the embedding representation management method according to the first aspect or one or more of the plurality of possible implementations of the first aspect.

According to a fourth aspect, an embodiment of this application provides a non-volatile computer-readable storage medium. The non-volatile computer-readable storage medium stores computer program instructions, and when the computer program instructions are executed by a processor, the embedding representation management method according to the first aspect or one or more of the plurality of possible implementations of the first aspect is implemented.

According to a fifth aspect, an embodiment of this application provides a computer program product, including computer-readable code or a non-volatile computer-readable storage medium carrying computer-readable code, where when the computer-readable code is run in an electronic device, a processor in the electronic device performs the embedding representation management method according to the first aspect or one or more of the plurality of possible implementations of the first aspect.

These aspects and other aspects of this application are more concise and more comprehensive in descriptions of the following (a plurality of) embodiments.

## BRIEF DESCRIPTION OF DRAWINGS

The accompanying drawings included in this specification and constituting a part of this specification and this specification jointly show example embodiments, features, and aspects of this application, and are intended to explain the principles of this application.

FIG. 1 is a diagram of a system architecture of an embedding representation management system according to an embodiment of this application;
FIG. 2 is a diagram of a software architecture of an embedding representation management system according to an embodiment of this application;
FIG. 3 is a diagram of a component structure of an embedding representation management system according to an embodiment of this application;
FIG. 4 is a flowchart of an embedding representation management method according to an embodiment of this application;
FIG. 5 is a diagram of a nearest neighbor graph according to an embodiment of this application;
FIG. 6 is a diagram of version evolution of an embedding representation according to an embodiment of this application;
FIG. 7 is a diagram of multi-level differential storage according to an embodiment of this application;
FIG. 8 is a diagram of visualization of an embedding representation according to an embodiment of this application;
FIG. 9 is a diagram of visualization of an embedding representation according to an embodiment of this application;
FIG. 10 is a diagram of visualization of an embedding representation according to an embodiment of this application; and
FIG. 11 is a block diagram of an embedding representation management apparatus according to an embodiment of this application.

## DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

In the field of information retrieval, an embedding representation (Embedding) is a vectorized representation of information such as a user, a web page, and a video in the Internet. For example, a vectorized representation may be performed on one web page in the Internet, to obtain one embedding representation having a specific meaning, in other words, one web page corresponds to one embedding representation, and different web pages correspond to different embedding representations. Therefore, the embedding representation is an important representation of Internet information.

With explosive growth of Internet data amount, there is an increasing quantity of pre-trained models for the embedding representation. For example, models such as generative pre-training (generative pre-training, GPT), and bidirectional encoder representations from transformer (transformer) (bidirectional encoder representations from transformer, BERT) are widely used in natural language understanding, models such as visual BERT (visual BERT) and one-stage object detection (you only look once, YOLO) are widely used in computer vision, and models such as graph convolutional neural network (Graph Convolutional Network, GCN) are widely used in large-scale graph learning. In addition, as retrieval requirements become more extensive, a multimodal pre-training model for the embedding representation emerges, allowing information across different modalities to be associated. Therefore, the embedding representation becomes increasingly diversified, and presents multi-version and multi-granularity representation forms.

For example, for one web page in the Internet, an embedding representation related to natural language processing (Graph Convolutional Network, NLP) may be obtained for text content, picture or video content may also be encoded into a visual embedding representation, and an embedding representation related to a graph structure exists in a web page link relationship graph (or a user-web page bipartite graph).

In a related technology, an existing embedding representation is usually managed in a form of file. This can resolve version management of an order of magnitude of "ten". However, with a continuous increase in pre-training manners, scenarios, and data scales, the existing embedding representation management manner is not applicable to multi-version embedding representation management, and has problems such as high management costs and poor management efficiency.

To resolve the foregoing technical problems, this application provides an embedding representation management method. The embedding representation management method includes: loading, in response to a first version number input by a user, a first embedding representation corresponding to the first version number from a disk into a memory; training the first embedding representation based on preset training data to obtain a second embedding representation; determining a second version number of the second embedding representation based on the first version number and a scenario of the training data; and storing the second embedding representation and the second version number on the disk.

According to the embedding representation management method in embodiments of this application, the first embedding representation corresponding to the first version number is loaded from the disk into the memory in response to the first version number input by the user; then, the first embedding representation is trained based on the preset training data to obtain the second embedding representation; then, the second version number of the second embedding representation is determined based on the first version number and the scenario of the training data; and the second embedding representation and the second version number are stored on the disk. Multi-version embedding representation management is implemented, to reduce management costs of the embedding representations, and improve management efficiency.

The embedding representation management method in embodiments of this application may be applied to an electronic device. The electronic device includes a server and a terminal device connected to the server. The server may be a cloud server, a server cluster, or the like. The terminal device may be a personal computer, a notebook computer, a smartphone, a tablet computer, or the like. Specific types of the server and the terminal device are not limited in this application.

From a perspective of a product implementation, the embedding representation management method in this embodiment of this application may be implemented as an embedding representation management system (or an embedding representation management platform). The embedding representation management system may serve offline model training, online streaming learning, online inference, and the like of the embedding representation. The embedding representation management system may be used to implement multi-version embedding representation management, for example, implement functions of the embedding representation such as version tracking and control, version difference comparison, multi-level differential storage, and visualization. A person skilled in the art may set, based on an actual situation, a specific function implemented by the embedding representation management system. This is not limited in this application.

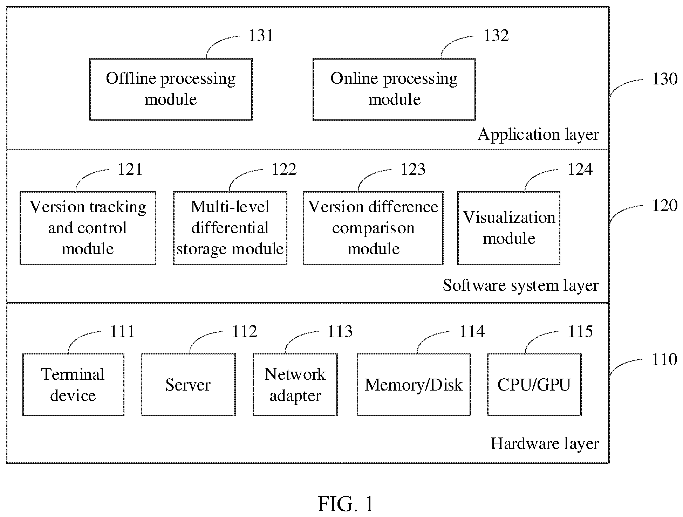

FIG. 1 is a diagram of a system architecture of an embedding representation management system according to an embodiment of this application. As shown in FIG. 1, the system architecture of the embedding representation management system includes three layers: a hardware layer 110, a software system layer 120, and an application layer 130.

The hardware layer 110 includes various types of hardware required for implementing the embedding representation management system, and may specifically include a terminal device 111, a server 112, a network adapter 113, a memory/disk 114, a central processing unit (central processing unit, CPU)/graphics processing unit (graphics processing unit, GPU) 115, and the like. During actual application, the hardware layer 110 may further include other hardware. This is not limited in this application.

The terminal device 111 is an electronic device that may be connected to the embedding representation management system and that may perform an interface interaction operation, and includes but is not limited to a personal computer, a notebook computer, a smartphone, a tablet computer, and the like. A specific type of the terminal device 111 is not limited in this application. The server 112 is a physical machine configured to deploy modules of the embedding representation management system. The server 112 may be a cloud server, a server cluster, or the like. A specific type of the server 112 is not limited in this application. The network adapter 113 is a physical device configured for communication between hardware of the embedding representation management system. The communication herein may be, for example, communication between servers in the server cluster, communication between the terminal device and the server, or the like. The memory/disk 114 is configured to store a multi-version embedding representation. The memory has a high query speed, and is mainly configured to store an embedding representation version to be frequently invoked, for example, an embedding representation version used for online inference, and an embedding representation version that is currently trained. The disk is mainly configured to store an embedding representation of a historical backup. The CPU/GPU 115 is configured to complete related computation of the embedding representation management system.

At the hardware layer in FIG. 1, the network adapter 113, the memory/disk 114, and the CPU/GPU 115 are used as separate hardware examples. During actual application, the network adapter 113, the memory/disk 114, and the CPU/GPU 115 may be located in the server 112, and the terminal device 111 may also include the network adapter 113. A person skilled in the art may set installation positions and installation manners of various types of hardware based on an actual situation. This is not limited in this application.

The software system layer 120 includes a component or module configured to implement a core function of the embedding representation management system, and may specifically include a version tracking and control module 121, a multi-level differential storage module 122, a version difference comparison module 123, and a visualization module 124.

The application layer 130 includes a component or module configured to implement offline and online procedures of the embedding representation management system, and may specifically include an offline processing module 131 and an online processing module 132. In some examples, the application layer 130 may further include a dynamic monitoring module (not shown in the figure) configured to dynamically monitor offline and online training processes of an embedding representation.

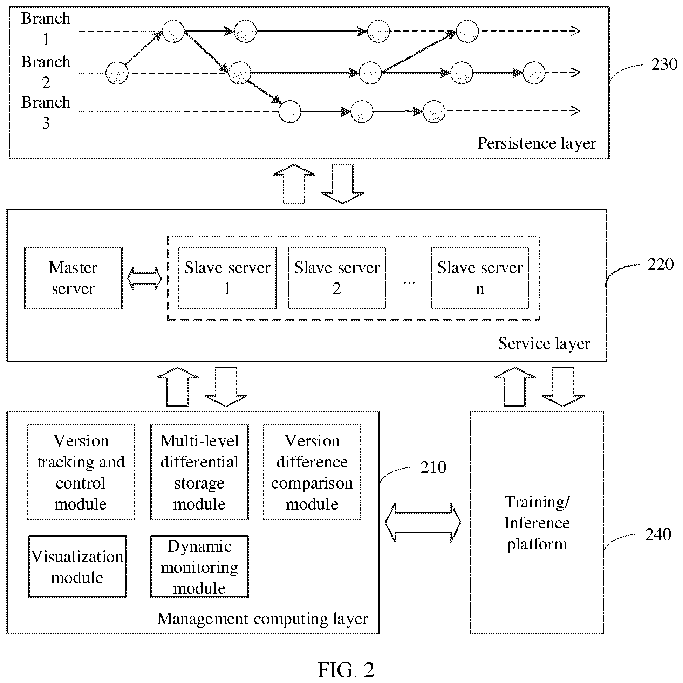

FIG. 2 is a diagram of a software architecture of an embedding representation management system according to an embodiment of this application. As shown in FIG. 2, the software architecture of the embedding representation management system includes three layers: a management computing layer 210, a service layer 220, and a persistence layer 230.

The management computing layer 210 includes program code of a core module of the embedding representation management system. For example, the management computing layer 210 may include program code of a version tracking and control module, a multi-level differential storage module, a version difference comparison module, a visualization module, and a dynamic monitoring module of the embedding representation management system, to provide functions such as version tracking and control, storage, difference comparison, and dynamic monitoring in a training process of an embedding representation. The management computing layer 210 is connected to a training/inference platform 240, and may dynamically monitor the training process (including offline training and online streaming training) of the embedding representation.

The service layer 220 provides services such as distributed storage, real-time read/write, and update of the embedding representation in the embedding representation management system. The service layer 220 may communicate with the management computing layer 210 and the training/inference platform 240 according to a TCP/IP protocol. The service layer 220 may use a distributed system. When the service layer 220 uses a distributed system, the service layer 220 may include one master (master) server, and a plurality of slave servers (servers): a slave server 1, a slave server 2, ..., and a slave server n (n is a positive integer). The master server may communicate with each slave server according to the TCP/IP protocol, but the slave servers are not connected and do not communicate with each other. The master server mainly provides global ID management and mapping, and performs management on operations together such as a dump (push, that is, storing an embedding representation from a memory to a disk), expansion, and redundancy of the embedding representation. The slave server provides high-speed read and write services.

The persistence layer 230 is configured to provide dumped storage of embedding representations in a plurality of historical versions. As shown in FIG. 2, the persistence layer 230 stores embedding representations in a plurality of versions as the embedding representations evolve along three branches (a branch 1, a branch 2, and a branch 3). The persistence layer 230 communicates with the service layer 220 according to the TCP/IP protocol. The persistence layer 230 may also use a distributed system. In an example, a distributed node of the persistence layer 230 shares one machine with the slave servers of the service layer 220, so that remote communication can be reduced and processing efficiency can be improved.

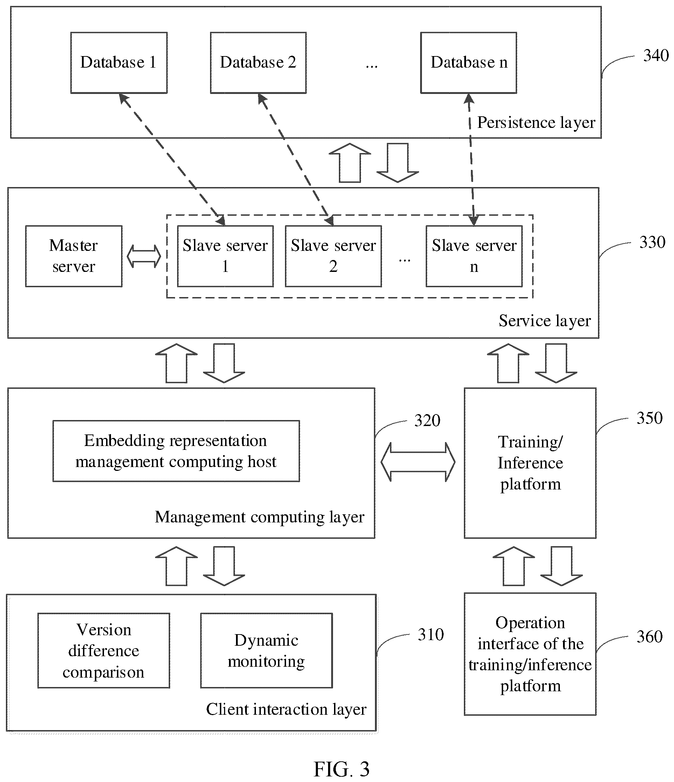

FIG. 3 is a diagram of a component structure of an embedding representation management system according to an embodiment of this application. As shown in FIG. 3, to improve adaptability between the embedding representation management system and a training/inference platform 350, the embedding representation management system in this embodiment of this application uses a hierarchical design. From an upper-layer user interaction to bottom-layer storage, the embedding representation management system includes a client interaction layer 310, a management computing layer 320, a service layer 330, and a persistence layer 340.

A front end of the client interaction layer 310 may be designed by using a front-end framework (for example, Vue, React, or Qt) commonly used in the industry, including but not limited to a form of web page (Web) or an application (application, APP), and is configured to provide a set of concise and efficient operation interfaces for a user. The client interaction layer 310 may provide operations and display of functions such as version difference comparison and dynamic monitoring of the embedding representation management system.

The management computing layer 320 is a core computing component of the embedding representation management system. The management computing layer 320 may include one or more embedding representation management computing hosts responsible for completing related computation of the embedding representation management system. In addition, the management computing layer 320 may further communicate with the training/inference platform 350 according to a TCP/IP protocol, to complete a collaborative task between training/inference and management of an embedding representation. In addition, the training/inference platform 350 may communicate with an operation interface 360 of the training/inference platform according to the TCP/IP protocol, to implement an interface operation and display of the training/inference platform.

Both the service layer 330 and the persistence layer 340 are configured to implement distributed storage of the embedding representation. The service layer 330 may provide a high-speed read/write operation for the embedding representation, and support multi-version distributed training, an online inference service, and the like. The service layer 330 may be implemented as a distributed system including one master (master) server and a plurality of slave servers (servers). The plurality of slave servers are a slave server 1, a slave server 2, ..., and a slave server n (n is a positive integer). The master server may communicate with each slave server according to the TCP/IP protocol, but the slave servers are not connected and do not communicate with each other.

The persistence layer 340 is configured to provide dumped storage of embedding representations in a plurality of historical versions. The persistence layer 340 may also use a distributed system. As shown in FIG. 3, the persistence layer 340 is implemented as a distributed storage system including a database 1, a database 2, ..., and a database n. The database may be a key-value (key-value) database, for example, RocksDB. A specific type of the database is not limited in this application. In an example, a database of the persistence layer 340 may share one machine with a slave server of the service layer 330, that is, the database 1 shares one machine with the slave server 1, the database 2 shares one machine with the slave server 2, ..., and the database n shares one machine with the slave server n.

It can be learned from FIG. 3 that, in the embodiment shown in FIG. 3, the embedding representation is stored and managed in a distributed multi-level storage manner. From a perspective of the training/inference platform 350, the service layer 330 provides a distributed multi-machine memory storage solution, provides a fast read/write capability of the embedding representation for the training/inference platform 350, and supports an efficient offline training service and a real-time online inference service. The persistence layer 340 stores all embedding representation versions of historical training, and uses a distributed multi-machine storage solution with a disk/hard disk (for example, a solid state drive (solid state drive, SSD) or a mechanical hard disk (hard disk drive, HDD)).

From a perspective of hardware implementation, in the embodiment shown in FIG. 3, the persistence layer 340 and the service layer 330 are in one cluster. Each machine in the cluster includes at least one server service of the service layer and one database service of the persistence layer. The server service is used to provide memory storage, and the database service is used to provide disk or hard disk storage. In this design solution, in an embedding representation load task, each machine in the cluster only needs to read an embedding representation from a local hard disk and write the embedding representation to a local memory. In this case, there is no need for communication between server services and between database services, so that unnecessary communication overheads are reduced.

For storage of an embedding representation (Embedding) of the service layer 330, when a to-be-stored embedding is allocated to each machine, a mapping manner combining a hashMap (hashmap) and a linear list (array) may be used, and the master server performs all mapping-related processing. An embedding representation in each version has a corresponding embedding representation table (Embedding table), and the embedding table is used to store a plurality of embeddings and IDs of the embeddings. For each embedding table, the master server of the service layer maintains a hashMap: hashmap<emb_id, pair<server_id, index>>, where emb_id represents an ID of an embedding, server_id represents a number of a server of the service layer, and index represents an index subscript of an embedding whose ID is emb_id in an array. Based on the foregoing hashMap, an ID of any embedding in the embedding table may be directly mapped to an index subscript on a machine (server).

Each server uses a linear table to store the embedding table. To achieve load balancing, a static embedding table may be evenly allocated to different servers in an "equal split" manner, and a dynamically scaled embedding table may be allocated by using a strategy of "preferentially allocating a server with less storage".

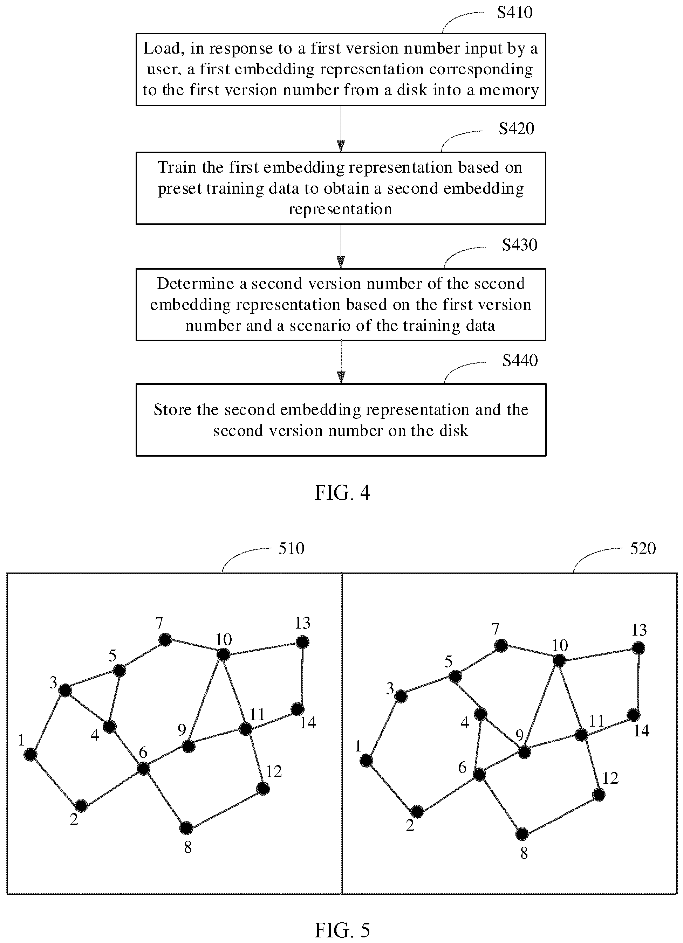

FIG. 4 is a flowchart of an embedding representation management method according to an embodiment of this application. As shown in FIG. 4, the embedding representation management method includes:

S410: Load, in response to a first version number input by a user, a first embedding representation corresponding to the first version number from a disk into a memory.

When training the embedding representation, the user first needs to specify the first version number of the to-be-trained first embedding representation. For example, the user may input the first version number of the to-be-trained first embedding representation on an operation interface of a training/inference platform. An embedding representation management system may load, in response to the first version number input by the user, the first embedding representation corresponding to the first version number from the disk into the memory. The first embedding representation herein is a full vector of the embedding representation corresponding to the first version number. That is, the first embedding representation includes a plurality of dense vectors (namely, embedding representations) and IDs (identities) corresponding to the dense vectors.

For example, in the embedding representation management system, a service layer corresponds to the memory, and a persistence layer corresponds to the disk. After the user inputs the first version number on the operation interface of the training/inference platform, the training/inference platform sends the first version number to a management computing layer of the embedding representation management system. After receiving the first version number, the management computing layer sends a load (pull, namely, an operation of loading an embedding representation from the disk to the memory) request for the first version number to the service layer. The load of the first version number herein is a load of the full vector of the first embedding representation corresponding to the first version number. After receiving the load request for the first version number sent by the management computing layer, the service layer sends a load task for the first version number to the persistence layer. After receiving the load task for the first version number sent by the service layer, the persistence layer immediately and concurrently reads the first embedding representation corresponding to the first version number, serializes the read first embedding representation, and sends the first embedding representation to the service layer according to a TCP/IP protocol. If the persistence layer shares a node with the service layer, each node directly writes the read first embedding representation to the local memory.

The service layer includes a plurality of servers. After receiving data sent by the persistence layer, the service layer divides the data into a plurality of copies and evenly distributes the copies to each server. A specific allocation strategy may be a common strategy of a distributed system in the industry (needing to consider load balancing, scaling, and the like). A master server uses a same strategy to implement allocation. After receiving the data sent by the persistence layer, each server may deserialize the data into an ID and a dense vector, and then store the ID and the dense vector in the memory, to load the first embedding representation corresponding to the first version number from the disk to the memory. In other words, the full vector of the first embedding representation is stored in the memory.

In a possible implementation, when the first embedding representation corresponding to the first version number is loaded from the disk into the memory, if the disk further stores a first nearest neighbor graph corresponding to the first embedding representation, the first nearest neighbor graph may also be simultaneously loaded from the disk into the memory. The first nearest neighbor graph is a k-nearest neighbor graph (K-nearest neighbor graph, KNN Graph) constructed based on the first embedding representation, and k is a positive integer.

In a possible implementation, if the user does not input the first version number, a latest version number of the embedding representation in the embedding representation management system is used by default, that is, a first embedding representation corresponding to the latest version number is loaded from the disk into the memory.

S420: Train the first embedding representation based on preset training data to obtain a second embedding representation.

After the first embedding representation corresponding to the first version number is loaded from the disk into the memory, the first embedding representation may be trained based on the preset training data. When the first embedding representation is trained, the first embedding representation may be used as a model parameter for training. In other words, the first embedding representation may be trained through model training.

When the first embedding representation is trained based on the preset training data, the service layer (namely, the memory) is equivalent to a dictionary providing the first embedding representation. The training/inference platform may obtain, from the service layer by using an ID of the training data, a dense vector (namely, an embedding representation) corresponding to the training data, use the obtained dense vector as a model input for model training (offline training or online streaming training), and then send, to the service layer, a gradient obtained in a training process for the first embedding representation. After receiving the gradient for the first embedding representation, the service layer first aggregates (reduces) the gradient, and then updates the first embedding representation based on an aggregated gradient. When a preset training end condition (for example, a quantity of training epochs reaches a preset epoch threshold, or a loss function of a model converges within a specific range) is met, training is ended, to obtain the second embedding representation. In a possible implementation, if an embedding representation corresponding to the ID of the training data does not exist in the first embedding representation, a corresponding embedding representation may be generated for the training data in a random initialization manner.

The training data may be determined based on a scenario, for example, news, a web page, or a commodity. For example, assuming that the scenario of the training data is a commodity, and the first embedding representation is an embedding representation of user information, the first embedding representation is trained based on the training data, and the obtained second embedding representation is an embedding representation of the user information in a commodity scenario. In other words, the second embedding representation corresponds to the scenario of the training data. The training data is different in different scenarios, and the second embedding representation obtained through training is also different.

In a possible implementation, in the training process of the first embedding representation, a first intermediate version of the first embedding representation may be obtained based on a preset first time interval. The first time interval may be set to a daily basis. For example, the first time interval is one day, three days, or five days. A person skilled in the art may set a specific length of the first time interval based on an actual situation. This is not limited in this application. In the training process of the first embedding representation, a plurality of first intermediate versions may be obtained.

Each time after a latest first intermediate version is obtained, it may be determined whether the latest obtained first intermediate version meets a preset first evaluation condition. The first evaluation condition may be used to evaluate quality of the first intermediate version, and may be an offline evaluation or an online evaluation. The offline evaluation may usually evaluate the quality of the first intermediate version by collecting split data of another path based on an A/B test. The online evaluation usually evaluates the quality of the first intermediate version based on online inference service effect of the first intermediate version.

When the latest obtained first intermediate version meets the first evaluation condition, the latest obtained first intermediate version may be stored on the disk, to implement a daily dump of the first intermediate version of the first embedding representation. The daily dump herein means storing a full vector of the first intermediate version of the first embedding representation on the disk. In other words, the daily dump of the first intermediate version of the first embedding representation is full storage. When the latest obtained first intermediate version is stored on the disk, a multi-level differential storage manner may be used. Multi-level differential storage is an incremental storage and indexing manner. During storage, only an embedding representation that changes in a new version compared with that in a previous version is stored, and an embedding representation that does not change is directly indexed to the embedding representation in the previous version or an index of the embedding representation in the previous version. A specific implementation of the multi-level differential storage is described in detail in the following embodiments.

In this manner, in the training process of the first embedding representation, the daily dump of the first intermediate version of the first embedding representation can be implemented, so that when an anomaly is detected in the training process, rollback can be performed based on a stored daily intermediate version (a full intermediate version), to reduce operation and maintenance costs of developing the embedding representation.

In the foregoing embodiment, the daily dump of the first intermediate version of the first embedding representation is triggered in a timing triggering manner (that is, the dump is triggered after the first time interval is reached). Alternatively, the daily dump of the first intermediate version of the first embedding representation may be triggered in a quantitative triggering manner (that is, the dump is triggered after training of a fixed data amount is completed). A person skilled in the art may set a trigger manner for the daily dump based on an actual situation. This is not limited in this application.

In a possible implementation, in the training process of the first embedding representation, as the training is performed, a part of embedding representation in the first embedding representation changes. The management computing layer may traverse each changed node based on a nearest neighbor graph KNN Graph of a previous version, and update an M-order neighbor (M is a positive integer) of the node (that is, reconstruct the M-order neighbor of each changed node), to dynamically update the nearest neighbor graph KNN Graph.

In a possible implementation, each time after a latest first intermediate version is obtained, a nearest neighbor graph of a previous version may be updated to obtain a nearest neighbor graph corresponding to the latest obtained first intermediate version, and when the latest obtained first intermediate version is stored on the disk, the nearest neighbor graph corresponding to the latest obtained first intermediate version is also stored on the disk.

In a possible implementation, in the training process of the first embedding representation, a second intermediate version of the first embedding representation may be obtained based on a preset second time interval. The second time interval may be set to an hourly basis or a minute basis. For example, assuming that the second time interval is on the hourly basis, the second time interval may be set to one hour, two hours, or the like. Assuming that the second time interval is on the minute basis, the second time interval may be set to 15 minutes, 30 minutes, or the like. A person skilled in the art may set a specific length of the second time interval based on an actual situation. This is not limited in this application. In the training process of the first embedding representation, a plurality of second intermediate versions may be obtained.

Each time after a latest second intermediate version is obtained, a first difference between the latest obtained second intermediate version and a previous second intermediate version may be determined. The first difference between the latest obtained second intermediate version and the previous second intermediate version may be determined by comparing nearest neighbor graphs of the latest obtained second intermediate version and the previous second intermediate version.

In a possible implementation, in the training process of the first embedding representation, the first nearest neighbor graph may be dynamically updated based on the second time interval, to obtain a nearest neighbor graph corresponding to each second intermediate version. A nearest neighbor graph corresponding to a 1st second intermediate version is obtained by updating the first nearest neighbor graph, and a nearest neighbor graph corresponding to an (i+1)th second intermediate version is obtained by updating a nearest neighbor graph corresponding to an ith second intermediate version (i is a positive integer), so that the first nearest neighbor graph can be dynamically updated in the training process.

An example of a specific process of updating the nearest neighbor graph corresponding to the ith second intermediate version to obtain the nearest neighbor graph corresponding to the (i+1)th second intermediate version is as follows: For an embedding representation with an updated gradient (relative to the ith second intermediate version) in the (i+1)th second intermediate version, an M-order neighbor (M is a positive integer) of a node corresponding to the embedding representation with the updated gradient may be searched for in the nearest neighbor graph corresponding to the ith second intermediate version, and then, a neighbor node of the node corresponding to the embedding representation with the updated gradient is updated based on a distance (for example, a cosine distance (cosine distance) or a Euclidean distance (Euclidean distance)) between the embedding representation with the updated gradient and the M-order neighbor, to complete an update of the nearest neighbor graph, and obtain the nearest neighbor graph corresponding to the (i+1)th second intermediate version.

When the first difference between the latest obtained second intermediate version and the previous second intermediate version is determined, a third nearest neighbor graph and a fourth nearest neighbor graph may be obtained first, where the third nearest neighbor graph is a nearest neighbor graph corresponding to the latest obtained second intermediate version, and the fourth nearest neighbor graph is a nearest neighbor graph corresponding to the previous second intermediate version; and then a changed node in the third nearest neighbor graph is determined based on the fourth nearest neighbor graph. The changed node in the third nearest neighbor graph herein is a node that changes in the third nearest neighbor graph relative to the fourth nearest neighbor graph due to training.

In an example, an embedding representation participating in training between the previous second intermediate version and the latest obtained second intermediate version may be considered as a changed embedding representation, and then a node that is in the third nearest neighbor graph and that corresponds to the changed embedding representation is determined as the changed node in the third nearest neighbor graph. For example, IDs of embedding representations that exist in training data between the previous second intermediate version and the latest obtained second intermediate version may be viewed. If the IDs of the embedding representations exist in the training data, it may be considered that the embedding representations corresponding to the IDs participate in training between the previous second intermediate version and the latest obtained second intermediate version. Then, the embedding representations corresponding to the IDs that exist in the training data may be determined as changed embedding representations, and a node that is in the third nearest neighbor graph and that corresponds to the changed embedding representation is determined as the changed node in the third nearest neighbor graph.

In another example, the changed node in the third nearest neighbor graph may be determined by comparing an embedding representation corresponding to a node in the third nearest neighbor graph with an embedding representation corresponding to a node in the fourth nearest neighbor graph. A specific manner of determining the changed node in the third nearest neighbor graph is not limited in this application.

After the changed node in the third nearest neighbor graph is determined, neighbor change information and node change information of each changed node may be determined. The neighbor change information includes at least one of a neighbor change quantity, a neighbor change ratio, and a local neighbor similarity score, and the node change information includes at least one of a node offset direction and a node offset distance. It is assumed that a preset neighbor quantity of each node is P (P is a positive integer). For any changed node, an M-order new neighbor of the changed node may be determined from the third nearest neighbor graph, an M-order old neighbor of the changed node may be determined from the fourth nearest neighbor graph, and a quantity of M-order new neighbors of the changed node that are changed relative to M-order old neighbors is determined as a neighbor change quantity of the changed node. A neighbor change ratio of the changed node is a ratio of the neighbor change quantity of the changed node to a preset neighbor quantity P. A local neighbor similarity score of the changed node may be determined according to Formula (1):

$$score = S\big(KNN(w_1), KNN(w_2)\big) \qquad (1)$$

In Formula (1), $w_1$ represents the changed node, $w_2$ represents a node that is in the fourth nearest neighbor graph and that corresponds to the changed node, $KNN(w_1)$ represents k near neighbors (namely, k nearest neighbors) of $w_1$ in the third nearest neighbor graph, $KNN(w_2)$ represents k near neighbors (namely, k nearest neighbors) of $w_2$ in the fourth nearest neighbor graph, $S(KNN(w_1),KNN(w_2))$ represents calculation of a similarity between the k near neighbors of $w_1$ and the k near neighbors of $w_2$, which may be determined by using a Jaccard coefficient (Jaccard), and score represents a local neighbor similarity score of the changed node $w_1$, with a value ranging from 0 to 1.

A node offset direction and a node offset distance of the changed node may be determined based on a vector difference between a changed embedding representation and an unchanged embedding representation of the changed node. Specifically, a length of the vector difference between the changed embedding representation and the unchanged embedding representation of the changed node may be determined as the node offset distance of the changed node, and a direction of the vector difference is determined as the node offset direction of the changed node.

After the neighbor change information and the node change information of each changed node are determined in the foregoing manner, the first difference between the latest obtained second intermediate version and the previous second intermediate version may be determined based on the neighbor change information and the node change information of each changed node. In this manner, the first difference between the latest obtained second intermediate version and the previous second intermediate version may be quickly and accurately determined, to improve processing efficiency.

FIG. 5 is a diagram of a nearest neighbor graph according to an embodiment of this application. As shown in FIG. 5, a nearest neighbor graph 510 may be considered as the nearest neighbor graph corresponding to the previous second intermediate version, and a nearest neighbor graph 520 may be considered as the nearest neighbor graph corresponding to the latest obtained second intermediate version. The nearest neighbor graph 510 includes 14 nodes: a node 1, a node 2, ..., and a node 14. Compared with the nearest neighbor graph 510, only the node 4 in the nearest neighbor graph 520 changes, and the other nodes do not change. A first-order neighbor of the node 4 is a node (3, 5, 6) in the nearest neighbor graph 510, and a first-order neighbor of the node 4 is a node (5, 6, 9) in the nearest neighbor graph 520. It can be learned that a quantity of changed neighbor nodes of the node 4 is 1, and a neighbor node change ratio is 1/3.

After the first difference between the latest obtained second intermediate version and the previous second intermediate version is determined, it may be determined whether the first difference meets a preset second evaluation condition. The second evaluation condition may be used to evaluate quality of the second intermediate version. The second evaluation condition may include at least one of the following conditions: a neighbor change quantity of each changed node does not exceed a preset neighbor change quantity threshold, a neighbor change ratio of each changed node does not exceed a preset neighbor change ratio threshold, a local neighbor similarity score of each changed node is greater than or equal to a preset local neighbor similarity score threshold, an offset distance of each changed node does not exceed a preset node offset threshold, an offset direction of each changed node does not exceed a preset node offset direction threshold, or the like. During actual application, a person skilled in the art may set specific content of the second evaluation condition based on an actual situation. This is not limited in this application.

For example, for the node 4 in FIG. 5, assuming that an offset distance of the node 4 is greater than the preset node offset threshold, it may be considered that the latest obtained second intermediate version does not meet the second evaluation condition. For example, a semantic meaning represented by an offset of the node 4 is as follows: A user corresponding to the node 4 changes from liking "two dimensions" to an "extreme sport". The offset of the node 4 may be caused by noise or an anomaly resulting from training data or a training model. By comparing the two second intermediate versions, an anomaly can be quickly detected, and processing corresponding to automatic version rollback can be triggered.

When the first difference meets the second evaluation condition, the latest obtained second intermediate version may be backed up to the memory, to implement an hourly/minute backup of the second intermediate version of the first embedding representation. The hourly/minute backup is incremental storage. The multi-level differential storage manner can also be used herein. Because a difference between the second intermediate versions is frequently calculated and an hourly/minute increment is not large, the hourly/minute backup can be directly stored in the memory of the server, to support high-speed access by the management computing layer. In some examples, a quantity of versions in the hourly/minute backup may be further set. In this case, latest several backup versions may be retained in the memory based on the quantity of versions.

In this manner, in the training process of the first embedding representation, the hourly/minute backup of the second intermediate version of the first embedding representation can be implemented, so that when an anomaly is detected in the training process, version rollback can be performed based on an hourly/minute backup version (an incremental intermediate version), to reduce operation and maintenance costs of developing the embedding representation.

In the foregoing embodiment, the hourly/minute backup of the second intermediate version of the first embedding representation is triggered in a timing triggering manner (that is, the backup is triggered after the second time interval is reached). Alternatively, the hourly/minute backup of the second intermediate version of the first embedding representation may be triggered in a quantitative triggering manner (that is, the backup is triggered after training of a fixed data amount is completed). A person skilled in the art may set a trigger manner for the hourly/minute backup based on an actual situation. This is not limited in this application.

In a possible implementation, when the latest obtained first intermediate version does not meet the first evaluation condition (for example, when online effect of the latest obtained first intermediate version is obviously reduced), or when the first difference between the latest obtained second intermediate version and the previous second intermediate version does not meet the second evaluation condition, a rollback version can be selected from the second intermediate version in the memory or the first intermediate version on the disk according to a preset version rollback rule; and training can be continued based on the rollback version.

The preset version rollback rule may include a node rollback rule and a full rollback rule. Node rollback is version rollback mainly performed when a single node or a small quantity of nodes (a quantity of nodes can be set based on an actual situation) deviates or deviate. Correspondingly, the node rollback rule may be set to be that a quantity of deviation nodes does not exceed a preset deviation node threshold. When node rollback is performed, the rollback version may be selected from the second intermediate version in the memory, and then training is continued based on the rollback version. The deviation node herein is a node whose neighbor change information or node change information exceeds a corresponding threshold.

Full rollback is version rollback mainly performed when a large quantity of nodes deviate. Correspondingly, the full rollback rule may be set to be that a quantity of deviation nodes exceeds the preset deviation node threshold. When full rollback is performed, the rollback version may be selected from the first intermediate version stored on the disk, the selected rollback version is loaded from the disk to the memory, and then training is continued based on the rollback version.

In this manner, the training process of the first embedding representation can be dynamically monitored, and when an anomaly is detected, version rollback is automatically performed, so that adjustment for the anomaly or an online disturbance can be automatically completed without manual intervention in the training process of the embedding representation. This can further significantly reduce operation and maintenance costs of developing the embedding representation.

S430: Determine a second version number of the second embedding representation based on the first version number and a scenario of the training data.

After the second embedding representation is obtained, metadata (metadata) of the second embedding representation may be determined based on the first version number and the scenario of the training data. The metadata of the second embedding representation may include data such as the first version number, the scenario of the training data, a dimension (for example, 128 dimensions) of the second embedding representation, a quantity (for example, 100 million) of second embedding representations, and the like. In an example, the metadata of the second embedding representation may further include other data such as a model used during training, a training manner (for example, offline training or online streaming training), and collection time of the training data. A person skilled in the art may determine, based on an actual situation, specific content included in the metadata of the second embedding representation. This is not limited in this application. Then, the second version number of the second embedding representation may be determined based on the metadata of the second embedding representation. Version numbers of the second embedding representation obtained through training based on training data collected in different time periods in different scenarios are also different.

After the second version number of the second embedding representation is determined, an association relationship between the second version number and the first version number may be further established. In an example, the association relationship between the second version number and the first version number may be added to the metadata of the second embedding representation. In another example, the metadata of the second embedding representation may further include an ID of a dense vector (namely, an embedding representation) that is in the second embedding representation and that is not changed relative to the first embedding representation, so that fast switching between embedding representation versions can be implemented.

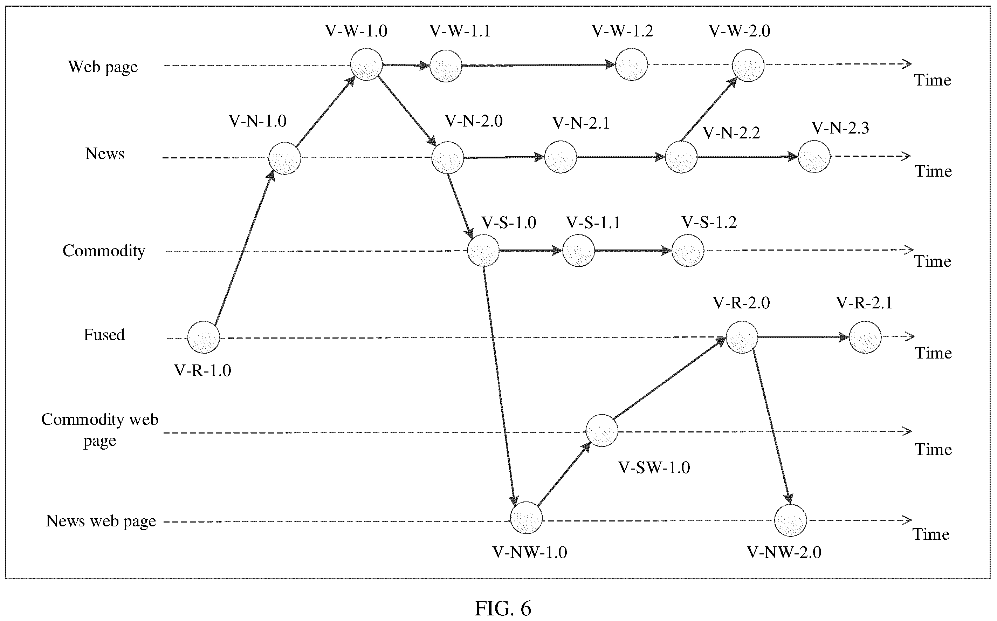

FIG. 6 is a diagram of version evolution of an embedding representation according to an embodiment of this application. As shown in FIG. 6, through continuous training starting from an initial fused embedding representation (namely, an embedding representation obtained through joint training based on data in web page, news, and commodity scenarios), that is, starting from an embedding representation whose version number is V-R-1.0, a plurality of versions and branches are evolved for service deployment or comparative analysis. As shown in FIG. 6, version numbers of embedding representations are different in different time periods in different scenarios.

S440: Store the second embedding representation and the second version number on the disk.

After the second embedding representation and the second version number are obtained, the second embedding representation and the second version number may be stored at the persistence layer, that is, stored on the disk.

In a possible implementation, the second embedding representation may be stored on the disk in the multi-level differential storage manner. Multi-level differential storage is an incremental storage and indexing manner. During storage, only an embedding representation that changes in a new version compared with that in a previous version is stored, and an embedding representation that does not change is directly indexed to the embedding representation in the previous version or an index of the embedding representation in the previous version.

In the training process, because most dense vectors in the first embedding representation are not changed, and only a small part of dense vectors are changed, the second embedding representation is stored on the disk in the multi-level differential storage manner. Although a full vector of the second embedding representation is stored from an external perspective, only an incremental part is stored in internal implementation. In this manner, a storage resource can be greatly saved, and storage consumption can be effectively reduced.

In a possible implementation, when the second embedding representation is stored on the disk in the multi-level differential storage manner, the fifth embedding representation may be first determined from the second embedding representation, where the fifth embedding representation is the embedding representation that is in the second embedding representation and that is changed relative to the first embedding representation; then, the fifth embedding representation is stored on the disk; and then the storage mapping table corresponding to the second embedding representation is established based on the first address and the second address, where the first address is the address, on the disk, of the embedding representation that is in the second embedding representation and that is not changed relative to the first embedding representation, and the second address is the address, on the disk, of the fifth embedding representation.

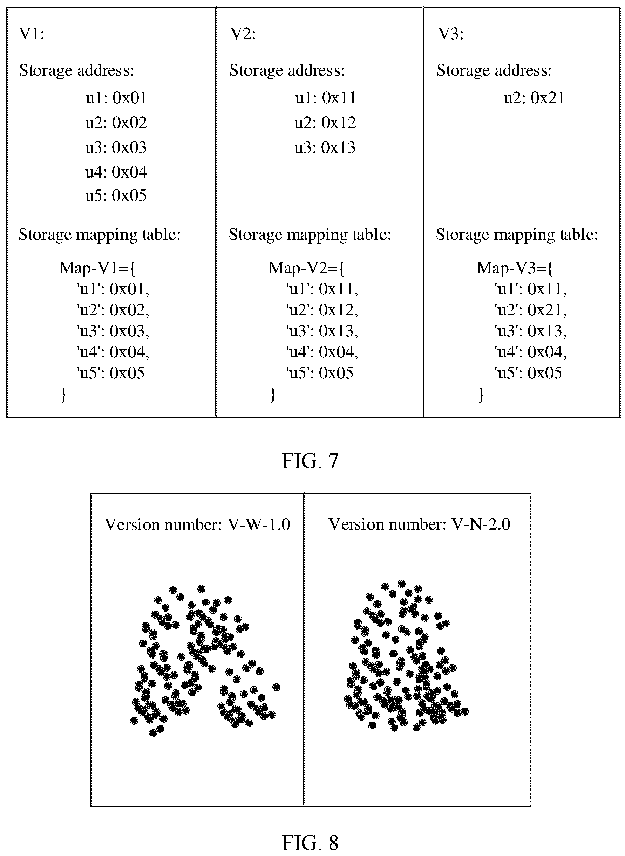

FIG. 7 is a diagram of multi-level differential storage according to an embodiment of this application. As shown in FIG. 7, an embedding representation whose version number is V1 includes five trained vectors: u1, u2, u3, u4, and u5. Actual storage addresses of the five vectors on a disk are: 0x01, 0x02, 0x03, 0x04 and 0x05. A storage mapping table corresponding to the embedding representation whose version number is V1 is Map-V1. Map-V1 records the actual storage addresses of the five vectors.

The embedding representation whose version number is V1 is trained to obtain an embedding representation whose version number is V2. After training, in comparison with the version V1, in the five vectors of the version V2, the vectors u1, u2, and u3 change, and changed u1, u2, and u3 may be incrementally stored on the disk, and actual storage addresses of changed u1, u2, and u3 are: 0x11, 0x12, and 0x13. Then, a storage mapping table Map-V2 corresponding to the embedding representation whose version number is V2 may be established. In Map-V2, changed u1, u2, and u3 are all mapped to new storage addresses, and unchanged u4 and u5 still use same mapping addresses as those in Map-V1.

The embedding representation whose version number is V2 is trained to obtain an embedding representation whose version number is V3. After training, in comparison with the version V2, in the five vectors of the version V3, only u2 changes, and changed u2 may be incrementally stored on the disk, and an actual storage address of changed u2 is 0x21. Then, a storage mapping table Map-V3 corresponding to the embedding representation whose version number is V3 may be established. In Map-V3, changed u2 is mapped to a new storage address, and unchanged u1, u3, u4, and u5 still use same mapping addresses as those in Map-V2.

In this manner, when the embedding representations in the three versions (15 vectors in total) are stored, storage space of only nine vectors is actually used, and storage space of six vectors is saved.

In a possible implementation, before the second embedding representation is stored on the hard disk, a quality evaluation may be further performed on the second embedding representation. When the second embedding representation passes the quality evaluation, the second embedding representation is stored on the disk in the foregoing manner.

In a possible implementation, after the second embedding representation is obtained, a second nearest neighbor graph corresponding to the second embedding representation may be determined, and an association relationship between the second nearest neighbor graph and the second embedding representation is established. When the second embedding representation is stored on the disk, the second nearest neighbor graph may also be simultaneously stored on the disk.

In a possible implementation, after training is ended and the second embedding representation is obtained, if the embedding representation needs to be deployed immediately for service after training is ended, the second embedding representation in a memory may not be deleted after the second embedding representation is stored on the hard disk (that is, dumped), so that an online inference service can directly access the second embedding representation that is the same as that used during the training for online inference. If the trained embedding representation is deployed, the embedding representation to be used is loaded from the disk into the memory in a manner similar to step S410, and online inference is performed based on the embedding representation in the memory.

In a possible implementation, the embedding representation management method in this application further provides visual display of the embedding representation, to display a difference between embedding representations in different versions. The visual display of the embedding representation is applied to a client interaction layer of an embedding representation management system.

In response to a user request for comparing a third embedding representation and a fourth embedding representation, the third embedding representation and the fourth embedding representation may be separately loaded from the disk into the memory, and dimensionality reduction is separately performed on the third embedding representation and the fourth embedding representation, to obtain a first dimensionality reduction vector and a second dimensionality reduction vector. For example, dimensionality reduction may be performed on a 128-dimensional third embedding representation to obtain a two-dimensional first dimensionality reduction vector, and dimensionality reduction may be performed on a 128-dimensional fourth embedding representation to obtain a two-dimensional second dimensionality reduction vector. Dimensionality reduction may be performed by using an existing related technology, for example, a principal components analysis (principal components analysis, PCA) technology, a t-distributed random neighbor embedding (t-distributed stochastic neighbor Embedding, t-SNE), or uniform manifold approximation and projection (uniform manifold approximation and projection, UMAP). A specific manner of the dimensionality reduction is not limited in this application.

A second difference between the third embedding representation and the fourth embedding representation may also be determined in a manner similar to the manner of determining the first difference in the foregoing embodiment. Then, the first dimensionality reduction vector, the second dimensionality reduction vector, and the second difference are displayed through a visual interface of the client interaction layer. A relationship between the third embedding representation and the fourth embedding representation is that the fourth embedding representation is obtained by training the third embedding representation.

FIG. 8 is a diagram of visualization of an embedding representation according to an embodiment of this application. As shown in FIG. 8, a version number of a third embedding representation is V-W-1.0, and a version number of a fourth embedding representation is V-N-2.0. A left part in FIG. 8 shows overall distribution, in vector space, of a first dimensionality reduction vector obtained by performing dimensionality reduction on the third embedding representation. A right part in FIG. 8 shows overall distribution, in the vector space, of a second dimensionality reduction vector obtained by performing dimensionality reduction on the fourth embedding representation. An overall difference between the third embedding representation and the fourth embedding representation in the vector space can be intuitively viewed from FIG. 8.

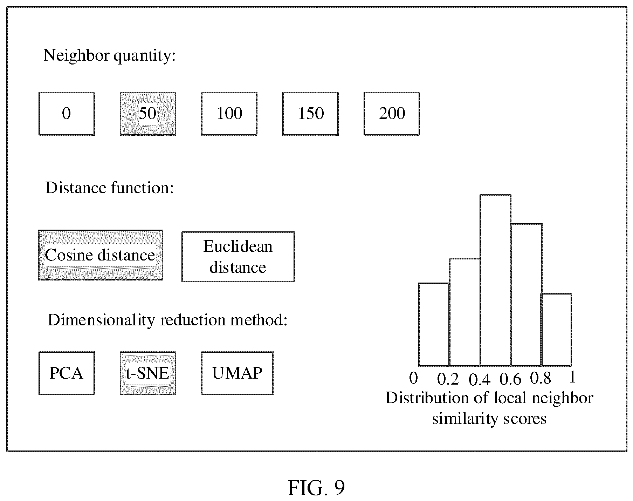

FIG. 9 is a diagram of visualization of an embedding representation according to an embodiment of this application. As shown in FIG. 9, a histogram in the figure is a distribution histogram of local neighbor similarity scores of a third embedding representation and a fourth embedding representation. On a visualization interface, a neighbor quantity, a distance function, and a dimensionality reduction method that are related to calculating the local neighbor similarity scores may be further selected.

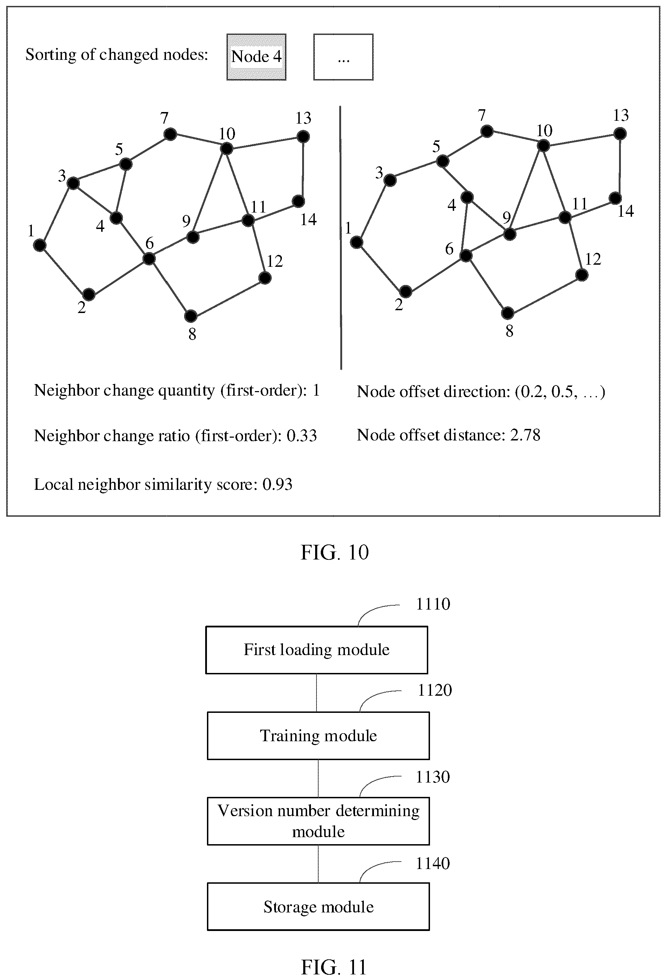

FIG. 10 is a diagram of visualization of an embedding representation according to an embodiment of this application. As shown in FIG. 10, a left part in the figure is a nearest neighbor graph of a third embedding representation, and a right part in the figure is a nearest neighbor graph of a fourth embedding representation. FIG. 10 further shows sorting of changed nodes. When one changed node is selected, for example, a node 4 is selected, neighbor change information and node change information of the changed node are displayed below, specifically including a neighbor change quantity (first-order), a neighbor change ratio (first-order), a local neighbor similarity score, a node offset direction, and a node offset distance.

In addition, visualization of an embedding representation further provides a view of domain space distribution of nodes in the third embedding representation and the fourth embedding representation, to observe learning effect of the embedding representations.

FIG. 11 is a block diagram of an embedding representation management apparatus according to an embodiment of this application. As shown in FIG. 11, the embedding representation management apparatus includes:

a first loading module 1110, configured to load, in response to a first version number input by a user, a first embedding representation corresponding to the first version number from a disk into a memory;
a training module 1120, configured to train the first embedding representation based on preset training data to obtain a second embedding representation;
a version number determining module 1130, configured to determine a second version number of the second embedding representation based on the first version number and a scenario of the training data; and
a storage module 1140, configured to store the second embedding representation and the second version number on the disk.

In a possible implementation, the training module 1120 includes: a first obtaining submodule, configured to: in a training process of the first embedding representation, obtain a first intermediate version of the first embedding representation based on a preset first time interval, where the first time interval is on a daily basis; a first storage submodule, configured to: when a latest obtained first intermediate version meets a preset first evaluation condition, store the latest obtained first intermediate version on the disk; and a training end submodule, configured to: when a preset training end condition is met, end training to obtain the second embedding representation.

In a possible implementation, the training module 1120 includes: a second obtaining submodule, configured to: in the training process of the first embedding representation, obtain a second intermediate version of the first embedding representation based on a preset second time interval, where the second time interval is on an hourly basis or a minute basis; a difference determining submodule, configured to determine a first difference between a latest obtained second intermediate version and a previous second intermediate version; and a second storage submodule, configured to: when the first difference meets a preset second evaluation condition, back up the latest obtained second intermediate version to the memory.

In a possible implementation, the training module 1120 includes: a rollback submodule, configured to: when the latest obtained first intermediate version does not meet the first evaluation condition, or when the first difference does not meet the second evaluation condition, select a rollback version from the second intermediate version in the memory or the first intermediate version on the disk according to a preset version rollback rule; and a training submodule, configured to continue training based on the rollback version.

In a possible implementation, the apparatus further includes: a second loading module, configured to load a first nearest neighbor graph corresponding to the first embedding representation from the disk into the memory; and the training module 1120 includes: a dynamic update submodule, configured to: in the training process of the first embedding representation, dynamically update the first nearest neighbor graph based on the second time interval, to obtain a nearest neighbor graph corresponding to each second intermediate version; and a nearest neighbor graph determining submodule, configured to: after the second embedding representation is obtained, determine a second nearest neighbor graph corresponding to the second embedding representation.

In a possible implementation, the difference determining submodule is configured to: obtain a third nearest neighbor graph and a fourth nearest neighbor graph, where the third nearest neighbor graph is a nearest neighbor graph corresponding to the latest obtained second intermediate version, and the fourth nearest neighbor graph is a nearest neighbor graph corresponding to the previous second intermediate version; determine a changed node in the third nearest neighbor graph based on the fourth nearest neighbor graph; determine neighbor change information and node change information of each changed node, where the neighbor change information includes at least one of a neighbor change quantity, a neighbor change ratio, and a local neighbor similarity score, and the node change information includes at least one of a node offset direction and a node offset distance; and determine the first difference between the latest obtained second intermediate version and the previous second intermediate version based on the neighbor change information and the node change information of each changed node.

In a possible implementation, the storage module includes: a differential storage submodule, configured to store the second embedding representation on the disk in a multi-level differential storage manner.

In a possible implementation, the differential storage submodule is configured to: determine a fifth embedding representation from the second embedding representation, where the fifth embedding representation is an embedding representation that is in the second embedding representation and that is changed relative to the first embedding representation; store the fifth embedding representation on the disk; and establish, based on a first address and a second address, a storage mapping table corresponding to the second embedding representation, where the first address is an address, on the disk, of an embedding representation that is in the second embedding representation and that is not changed relative to the first embedding representation, and the second address is an address, on the disk, of the fifth embedding representation.

In a possible implementation, the apparatus further includes: a dimensionality reduction module, configured to: in response to a user request for comparing a third embedding representation and a fourth embedding representation, separately perform dimensionality reduction on the third embedding representation and the fourth embedding representation, to obtain a first dimensionality reduction vector and a second dimensionality reduction vector; a difference determining module, configured to determine a second difference between the third embedding representation and the fourth embedding representation; and a display module, configured to display the first dimensionality reduction vector, the second dimensionality reduction vector, and the second difference.

An embodiment of this application provides an embedding representation management apparatus, including a processor, and a storage configured to store instructions executable by the processor, where the processor is configured to implement the foregoing method when executing the instructions.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product, including computer-readable code or a non-volatile computer-readable storage medium carrying computer-readable code. When the computer-readable code is run on a processor in an electronic device, the processor in the electronic device performs the foregoing method.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random-access memory (Random-Access Memory, RAM), a read-only memory (Read-Only Memory, ROM), an erasable programmable read-only memory (Electrically Programmable Read-Only Memory, EPROM, or flash memory), a static random-access memory (Static Random-Access Memory, SRAM), a portable compact disc read-only memory (Compact Disc Read-Only Memory, CD-ROM), a digital video disk (Digital Video Disc, DVD), a memory stick, a floppy disk, a mechanical coding device, for example, a punching card or a groove protrusion structure that stores instructions, and any suitable combination thereof.

Computer-readable program instructions or code described herein can be downloaded to respective computing/processing devices from a computer-readable storage medium, or downloaded to an external computer or external storage device via a network, like the Internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include object-oriented programming languages such as Smalltalk and C++, and conventional procedural programming languages such as a C language or a similar programming language. The computer-readable program instructions may be executed entirely on a user computer, partly on the user computer, as a stand-alone software package, partly on the user computer and partly on a remote computer, or entirely on the remote computer or a server. In a case related to a remote computer, the remote computer may be connected to a user computer over any kind of network, including a local area network (Local Area Network, LAN) or a wide area network (Wide Area Network, WAN), or may be connected to an external computer (for example, connected over Internet using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded into a computer, another programmable data processing apparatus, or another device so that a series of operation steps is performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. **In** this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function.

It should also be noted that each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "including" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Without departing from the scope of the described embodiments, many modifications and variations are clear to a person of ordinary skill in the technical field. Selection of terms used in this specification is intended to best describe principles of embodiments, actual applications, or improvements to technologies in the market, or to enable another person of ordinary skill in the art to understand embodiments disclosed in this specification.

## Claims

1. An embedding representation management method, wherein the method comprises:

    loading, in response to a first version number input by a user, a first embedding representation corresponding to the first version number from a disk into a memory;
    training the first embedding representation based on preset training data to obtain a second embedding representation;

    determining a second version number of the second embedding representation based on the first version number and a scenario of the training data; and
    storing the second embedding representation and the second version number on the disk.

2. The method according to claim 1, wherein the training the first embedding representation to obtain a second embedding representation comprises:

    in a training process of the first embedding representation, obtaining a first intermediate version of the first embedding representation based on a preset first time interval, wherein the first time interval is on a daily basis;
    when a latest obtained first intermediate version meets a preset first evaluation condition, storing the latest obtained first intermediate version on the disk; and
    when a preset training end condition is met, ending training to obtain the second embedding representation.

3. The method according to claim 2, wherein the training the first embedding representation to obtain a second embedding representation comprises:

    in the training process of the first embedding representation, obtaining a second intermediate version of the first embedding representation based on a preset second time interval, wherein the second time interval is on an hourly basis or a minute basis;
    determining a first difference between a latest obtained second intermediate version and a previous second intermediate version; and
    when the first difference meets a preset second evaluation condition, backing up the latest obtained second intermediate version to the memory.

4. The method according to claim 3, wherein the training the first embedding representation to obtain a second embedding representation comprises:

    when the latest obtained first intermediate version does not meet the first evaluation condition, or when the first difference does not meet the second evaluation condition, selecting a rollback version from the second intermediate version in the memory or the first intermediate version on the disk according to a preset version rollback rule; and
    continuing training based on the rollback version.

5. The method according to claim 3, wherein the method further comprises:

loading a first nearest neighbor graph corresponding to the first embedding representation from the disk into the memory; and
the training the first embedding representation to obtain a second embedding representation comprises:

in the training process of the first embedding representation, dynamically updating the first nearest neighbor graph based on the second time interval, to obtain a nearest neighbor graph corresponding to each second intermediate version; and
after the second embedding representation is obtained, determining a second nearest neighbor graph corresponding to the second embedding representation.

6. The method according to claim 5, wherein the determining a first difference between a latest obtained second intermediate version and a previous second intermediate version comprises:

obtaining a third nearest neighbor graph and a fourth nearest neighbor graph, wherein the third nearest neighbor graph is a nearest neighbor graph corresponding to the latest obtained second intermediate version, and the fourth nearest neighbor graph is a nearest neighbor graph corresponding to the previous second intermediate version;
determining a changed node in the third nearest neighbor graph based on the fourth nearest neighbor graph;
determining neighbor change information and node change information of each changed node, wherein the neighbor change information comprises at least one of a neighbor change quantity, a neighbor change ratio, and a local neighbor similarity score, and the node change information comprises at least one of a node offset direction and a node offset distance; and
determining the first difference between the latest obtained second intermediate version and the previous second intermediate version based on the neighbor change information and the node change information of each changed node.

7. The method according to any one of claims 1 to 6, wherein the storing the second embedding representation and the second version number on the disk comprises:
storing the second embedding representation on the disk in a multi-level differential storage manner.

8. The method according to claim 7, wherein the storing the second embedding representation on the disk in a multi-level differential storage manner comprises:

determining a fifth embedding representation from the second embedding representation, wherein the fifth embedding representation is an embedding representation that is in the second embedding representation and that is changed relative to the first embedding representation;
storing the fifth embedding representation on the disk; and
establishing, based on a first address and a second address, a storage mapping table corresponding to the second embedding representation, wherein the first address is an address, on the disk, of an embedding representation that is in the second embedding representation and that is not changed relative to the first embedding representation, and the second address is an address, on the disk, of the fifth embedding representation.

9. The method according to any one of claims 1 to 8, wherein the method further comprises:

in response to a user request for comparing a third embedding representation and a fourth embedding representation, separately performing dimensionality reduction on the third embedding representation and the fourth embedding representation, to obtain a first dimensionality reduction vector and a second dimensionality reduction vector;
determining a second difference between the third embedding representation and the fourth embedding representation; and
displaying the first dimensionality reduction vector, the second dimensionality reduction vector, and the second difference.

10. An embedding representation management apparatus, wherein the apparatus comprises:

a first loading module, configured to load, in response to a first version number input by a user, a first embedding representation corresponding to the first version number from a disk into a memory;
a training module, configured to train the first embedding representation based on preset training data to obtain a second embedding representation;
a version number determining module, configured to determine a second version number of the second embedding representation based on the first version number and a scenario of the training data; and

a storage module, configured to store the second embedding representation and the second version number on the disk.

11. The apparatus according to claim 10, wherein the training module comprises:

a first obtaining submodule, configured to: in a training process of the first embedding representation, obtain a first intermediate version of the first embedding representation based on a preset first time interval, wherein the first time interval is on a daily basis;

a first storage submodule, configured to: when a latest obtained first intermediate version meets a preset first evaluation condition, store the latest obtained first intermediate version on the disk; and

a training end submodule, configured to: when a preset training end condition is met, end training to obtain the second embedding representation.

12. The apparatus according to claim 11, wherein the training module comprises:

a second obtaining submodule, configured to: in the training process of the first embedding representation, obtain a second intermediate version of the first embedding representation based on a preset second time interval, wherein the second time interval is on an hourly basis or a minute basis;

a difference determining submodule, configured to determine a first difference between a latest obtained second intermediate version and a previous second intermediate version; and

a second storage submodule, configured to: when the first difference meets a preset second evaluation condition, back up the latest obtained second intermediate version to the memory.

13. The apparatus according to claim 12, wherein the training module comprises:

a rollback submodule, configured to: when the latest obtained first intermediate version does not meet the first evaluation condition, or when the first difference does not meet the second evaluation condition, select a rollback version from the second intermediate version in the memory or the first intermediate version on the disk according to a preset version rollback rule; and

a training submodule, configured to continue training based on the rollback version.

14. The apparatus according to claim 12, wherein the apparatus further comprises:

a second loading module, configured to load a first nearest neighbor graph corresponding to the first embedding representation from the disk into the memory; and

the training module comprises:

a dynamic update submodule, configured to: in the training process of the first embedding representation, dynamically update the first nearest neighbor graph based on the second time interval, to obtain a nearest neighbor graph corresponding to each second intermediate version; and

a nearest neighbor graph determining submodule, configured to: after the second embedding representation is obtained, determine a second nearest neighbor graph corresponding to the second embedding representation.

15. The apparatus according to claim 14, wherein the difference determining submodule is configured to:

obtain a third nearest neighbor graph and a fourth nearest neighbor graph, wherein the third nearest neighbor graph is a nearest neighbor graph corresponding to the latest obtained second intermediate version, and the fourth nearest neighbor graph is a nearest neighbor graph corresponding to the previous second intermediate version;

determine a changed node in the third nearest neighbor graph based on the fourth nearest neighbor graph;

determine neighbor change information and node change information of each changed node, wherein the neighbor change information comprises at least one of a neighbor change quantity, a neighbor change ratio, and a local neighbor similarity score, and the node change information comprises at least one of a node offset direction and a node offset distance; and

determine the first difference between the latest obtained second intermediate version and the previous second intermediate version based on the neighbor change information and the node change information of each changed node.

16. The apparatus according to any one of claims 10 to 15, wherein the storage module comprises: a differential storage submodule, configured to store the second embedding representation on the disk in a multi-level differential storage manner.

17. The apparatus according to claim 16, wherein the differential storage submodule is configured to:

determine a fifth embedding representation from the second embedding representation, wherein the fifth embedding representation is an embedding representation that is in the second embedding representation and that is changed relative to the first embedding representation;

store the fifth embedding representation on the disk; and

establish, based on a first address and a second address, a storage mapping table corresponding to the second embedding representation, wherein the first address is an address, on the disk, of an embedding representation that is in the second embedding representation and that is not changed relative to the first embedding representation, and the second address is an address, on the disk, of the fifth embedding representation.

18. The apparatus according to any one of claims 10 to 17, wherein the apparatus further comprises:

a dimensionality reduction module, configured to: in response to a user request for comparing a third embedding representation and a fourth embedding representation, separately perform dimensionality reduction on the third embedding representation and the fourth embedding representation, to obtain a first dimensionality reduction vector and a second dimensionality reduction vector;

a difference determining module, configured to determine a second difference between the third embedding representation and the fourth embedding representation; and

a display module, configured to display the first dimensionality reduction vector, the second dimensionality reduction vector, and the second difference.

19. An embedding representation management apparatus, comprising:

a processor, and

a storage, configured to store instructions executable by the processor, wherein

the processor is configured to implement the method according to any one of claims 1 to 9 when executing the instructions.

20. A non-volatile computer-readable storage medium, storing computer program instructions, wherein when the computer program instructions are executed by a processor, the method according to any one of claims 1 to 9 is implemented.

21. A computer program product, comprising computer-readable code or a non-volatile computer-readable storage medium carrying computer-readable code, wherein when the computer-readable code is run in an electronic device, a processor in the electronic device performs the method according to any one of claims 1 to 9.

| 131 | 132 | |
|---|---|---|
| Offline processing module | Online processing module | 130 |
| | | Application layer |

| 121 | 122 | 123 | 124 | |
|---|---|---|---|---|
| Version tracking and control module | Multi-level differential storage module | Version difference comparison module | Visualization module | 120 |
| | | | | Software system layer |

| 111 | 112 | 113 | 114 | 115 | |
|---|---|---|---|---|---|
| Terminal device | Server | Network adapter | Memory/Disk | CPU/GPU | 110 |
| | | | | | Hardware layer |

FIG. 1

Branch 1
Branch 2
Branch 3

Persistence layer

230

Master server

Slave server 1 | Slave server 2 | ... | Slave server n

Service layer

220

Version tracking and control module

Multi-level differential storage module

Version difference comparison module

Visualization module

Dynamic monitoring module

Management computing layer

210

Training/ Inference platform

240

FIG. 2

FIG. 3

S410

Load, in response to a first version number input by a user, a first embedding representation corresponding to the first version number from a disk into a memory

S420

Train the first embedding representation based on preset training data to obtain a second embedding representation

S430

Determine a second version number of the second embedding representation based on the first version number and a scenario of the training data

S440

Store the second embedding representation and the second version number on the disk

FIG. 4

510                                                     520

FIG. 5

FIG. 6

| V1: | V2: | V3: |
|---|---|---|
| Storage address: | Storage address: | Storage address: |
| u1: 0x01 | u1: 0x11 | u2: 0x21 |
| u2: 0x02 | u2: 0x12 | |
| u3: 0x03 | u3: 0x13 | |
| u4: 0x04 | | |
| u5: 0x05 | | |
| Storage mapping table: | Storage mapping table: | Storage mapping table: |
| Map-V1={ | Map-V2={ | Map-V3={ |
| 'u1': 0x01, | 'u1': 0x11, | 'u1': 0x11, |
| 'u2': 0x02, | 'u2': 0x12, | 'u2': 0x21, |
| 'u3': 0x03, | 'u3': 0x13, | 'u3': 0x13, |
| 'u4': 0x04, | 'u4': 0x04, | 'u4': 0x04, |
| 'u5': 0x05 | 'u5': 0x05 | 'u5': 0x05 |
| } | } | } |

FIG. 7

Version number: V-W-1.0   Version number: V-N-2.0

FIG. 8

Neighbor quantity:

| 0 | 50 | 100 | 150 | 200 |

Distance function:

| Cosine distance | Euclidean distance |

Dimensionality reduction method:

| PCA | t-SNE | UMAP |

0    0.2  0.4  0.6  0.8    1

Distribution of local neighbor
similarity scores

FIG. 9

Sorting of changed nodes: | Node 4 | ... |

Neighbor change quantity (first-order): 1          Node offset direction: (0.2, 0.5, ...)

Neighbor change ratio (first-order): 0.33          Node offset distance: 2.78

Local neighbor similarity score: 0.93

FIG. 10

1110 First loading module

1120 Training module

1130 Version number determining module

1140 Storage module

FIG. 11

# EP 4 607 374 A1

## INTERNATIONAL SEARCH REPORT

| | International application No. |
|---|---|
| | **PCT/CN2022/130311** |

| A. | CLASSIFICATION OF SUBJECT MATTER |
|---|---|

G06F 17/00(2019.01)i

According to International Patent Classification (IPC) or to both national classification and IPC

| B. | FIELDS SEARCHED |
|---|---|

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, CNKI, WPABSC, ENTXTC, DWPI: 嵌入表示, 版本, 硬盘, 内存, 训练, 模型, 场景, 时间间隔, 差异, 回退, 近邻图, 更新, 差分存储, 降维, embedding, version, hard disk, memory, training, model, scene, time interval, difference, backward, neighbor graph, update, differential storage, dimensionality reduction

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112530421 A (IFLYTEK CO., LTD.) 19 March 2021 (2021-03-19) description, paragraphs [0018]-[0127], and figures 1-7 | 1-20 |
| A | CN 112417633 A (NATIONAL UNIVERSITY OF DEFENSE TECHNOLOGY OF PLA) 26 February 2021 (2021-02-26) entire document | 1-20 |
| A | CN 113553386 A (INDUSTRIAL AND COMMERCIAL BANK OF CHINA CO., LTD.) 26 October 2021 (2021-10-26) entire document | 1-20 |
| A | CN 110825884 A (TENCENT TECHNOLOGY (SHENZHEN) CO., LTD.) 21 February 2020 (2020-02-21) entire document | 1-20 |
| A | CN 112215500 A (ALIPAY (HANGZHOU) INFORMATION TECHNOLOGY CO., LTD.) 12 January 2021 (2021-01-12) entire document | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 June 2023** | **21 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 607 374 A1**

International application No.

**PCT/CN2022/130311**

**C.    DOCUMENTS CONSIDERED TO BE RELEVANT**

| Category* | Citation of document, with indication, where appropriate, of the relevant passages | Relevant to claim No. |
|---|---|---|
| A | US 2019005409 A1 (FACEBOOK INC.) 03 January 2019 (2019-01-03)<br>entire document | 1-20 |
| A | US 2018052849 A1 (INTERNATIONAL BUSINESS MACHINES CORPORATION) 22 February 2018 (2018-02-22)<br>entire document | 1-20 |

Form PCT/ISA/210 (second sheet) (July 2022)

## INTERNATIONAL SEARCH REPORT

| International application No. |
|---|
| **PCT/CN2022/130311** |

**Box No. II    Observations where certain claims were found unsearchable (Continuation of item 2 of first sheet)**

This international search report has not been established in respect of certain claims under Article 17(2)(a) for the following reasons:

1. ☑ Claims Nos.: **21**
   because they relate to subject matter not required to be searched by this Authority, namely:

   The designation of the subject matter of claim 21 is "a computer program product", which falls within subject matter for which a search is not required by this authority.

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/CN2022/130311**

| Patent document cited in search report | | | Publication date (day/month/year) | Patent family member(s) | | | Publication date (day/month/year) |
|---|---|---|---|---|---|---|---|
| CN | 112530421 | A | 19 March 2021 | CN | 112530421 | B | 07 April 2023 |
| CN | 112417633 | A | 26 February 2021 | CN | 112417633 | B | 14 June 2022 |
| CN | 113553386 | A | 26 October 2021 | | None | | |
| CN | 110825884 | A | 21 February 2020 | HK | 40021922 | A0 | 13 November 2020 |
| CN | 112215500 | A | 12 January 2021 | CN | 112215500 | B | 28 June 2022 |
| | | | | HK | 40044730 | A0 | 08 October 2021 |
| | | | | HK | 40044730 | A1 | 07 October 2022 |
| US | 2019005409 | A1 | 03 January 2019 | | None | | |
| US | 2018052849 | A1 | 22 February 2018 | US | 10579940 | B2 | 03 March 2020 |
| | | | | US | 2020034741 | A1 | 30 January 2020 |
| | | | | US | 11436487 | B2 | 06 September 2022 |

Form PCT/ISA/210 (patent family annex) (July 2022)